# EUROPEAN PATENT SPECIFICATION

(11) **EP 1 598 162 B1**
(45) Date of publication and mention of the grant of the patent: **14.06.2006**
(21) Application number: 04425292.2
(22) Date of filing: 29.04.2004
(51) Int. Cl.: B28D 1/08, B23D 57/00

(54) **Wire saw for cutting blocks of stone**
Drahtsäge zum Schneiden von Gesteinsblöcken
Scie à fil pour couper des blocs de pierre

(43) Date of publication of application: 23.11.2005
(73) Proprietor: Pellegrini Meccanica S.p.A., 37135 Verona (IT)
(72) Inventor: Pellegrini, Marco Terzo, Illasi - Verona (IT)
(74) Representative: Ponchiroli, Simone

(56) References cited:
- WO-A-00/05021
- DE-C- 366 600
- FR-A- 1 046 789

## Description

The present invention relates to a machine for multiple wire cutting of blocks of stone material, to obtain slabs with a predetermined thickness according to the preamble of claim 1 (WO 00/05021).

In particular, the present invention relates to multiple wire cutting machines of the type in which the machine comprises a supporting frame at the two sides of which a pair of first rollers and a pair of second rollers are mounted. The rollers in each pair are vertically distanced from one another and have substantially horizontal axes of rotation.

A plurality of cutting wires are wound in a loop around the first and the second rollers.

The machine also comprises tensioning means for adjusting the tension of each cutting wire independently of the other cutting wires.

A first type of machine of this sort is described in patent WO 93/14914.

In this case, the first and the second upper rollers each consist of alternating radially fixed pulleys and radially mobile and independent pulleys, one for each cutting wire. A cutting wire which runs over a mobile pulley on the first roller runs over a fixed pulley on the second roller and vice versa.

The tensioning means act on each cutting wire, moving the mobile pulley over which the cutting wire runs.

However, this solution has the significant disadvantage of not allowing users to obtain slabs with a thickness below a minimum value determined by the need to position the fixed and mobile pulleys and relative supporting structures side-by-side on the first and the second rollers. On this subject it should be noticed that the greater size is due to the supporting structures which must engage with the pulleys at their axis of rotation.

A solution to the problem is proposed in patent EP 1 131 179.

In this case, the tensioning means are independent and are mounted on both sides of the machine so as to act on the portion of the cutting wires between the two rollers in each pair.

In particular, the cutting wires are tensioned alternately by the cutting means located on both sides of the machine.

This solution allows the space available for each tensioner to be increased, so that the cutting wires can be brought closer together, to obtain thinner slabs.

However, this solution has some disadvantages too.

Firstly, the machine has a notable side dimension due to the tensioning means projecting outwards.

Secondly, again the machine has significant limits in terms of the minimum thickness of the slab which can be obtained, limits again due to the side dimension of the supporting structure which supports each tensioning pulley.

Another disadvantage is the fact that the first and the second rollers, consisting of a single part in which a plurality of grooves are made, are subject to significant wear due to the different speeds at which the individual cutting wires run during use of the machine (the cutting wires all have the same speed only on the driving roller) .

In this situation, the technical need which forms the basis of the present invention is to provide a machine for multiple wire cutting of blocks of stone material which overcomes the above-mentioned disadvantages.

In particular, the technical need of the present invention is to provide a machine for multiple wire cutting of blocks of stone material which has a minimum side dimension but still allows separate tensioning of the individual cutting wires.

A further technical need of the present invention is to provide a machine for multiple wire cutting of blocks of stone material which allows users to obtain slabs of material which are thinner than those on machines currently known.

Another technical need of the present invention is to provide a machine for multiple wire cutting of blocks of stone material in which wear on the rollers and cutting wires is minimised.

The technical need specified and the aims indicated are substantially achieved by a machine for multiple wire cutting of blocks of stone material as described in the claims herein.

Other features and advantages of the invention are more clearly indicated in the detailed description which follows with reference to the accompanying drawings which illustrate several preferred non-restricting embodiments of a machine for multiple wire cutting of blocks of stone material and in which:
- Figure 1 is a schematic front view of a machine for multiple wire cutting of blocks of stone material in accordance with a first embodiment of the present invention;
- Figure 2 is a schematic side view of an apparatus for multiple wire cutting of blocks of stone material consisting of two machines made in accordance with the embodiment of the present invention illustrated in Figure 1 joined opposite one another;
- Figure 3 is a schematic side view partly in cross-section of the machine illustrated in Figure 1 according to the line III-III;
- Figure 4 is a schematic side view partly in cross-section of the machine illustrated in Figure 1 according to the line IV-IV;
- Figure 5 is a schematic side view partly in cross-section of the machine illustrated in Figure 1 according to the line V-V;
- Figure 6 is a schematic side view partly in cross-section of the machine illustrated in Figure 2 according to the line VI-VI in Figure 1;
- Figure 7 is an enlarged detail from 3;
- Figure 8 is a schematic view of the path of a first cutting wire on the machine illustrated in Figure 1;
- Figure 9 is a schematic view of the path of a second cutting wire on the machine illustrated in Figure 1;
- Figure 10 is a schematic view of the path of a third cutting wire on the machine illustrated in Figure 1;
- Figure 11 is a schematic front view of a machine for multiple wire cutting of blocks of stone material in accordance with a second embodiment of the present invention;
- Figure 12 is a schematic side view of an apparatus for multiple wire cutting of blocks of stone material consisting of two machines made in accordance with the second embodiment of the present invention illustrated in Figure 11 joined opposite one another;
- Figure 13 is a schematic view of the path of a first cutting wire on the machine illustrated in Figure 11;
- Figure 14 is a schematic view of the path of a second cutting wire on the machine illustrated in Figure 11;
- Figure 15 is a schematic view of the path of a third cutting wire on the machine illustrated in Figure 11;
- Figure 16 is a cross-section of a roller on a machine made in accordance with the present invention;
- Figure 17 is a cross-section of an alternative embodiment of the roller illustrated in Figure 16;
- Figure 18 is an axonometric cross-section of the roller illustrated in Figure 16;
- Figure 19 is an axonometric view of a tensioner on the machine illustrated in Figure 1;
- Figure 20 is a front view of a tensioner on the machine illustrated in Figure 11.

With reference to the accompanying drawings, the numeral 1 denotes as a whole a machine for multiple wire cutting of blocks 2 of stone material in accordance with the present invention.

The machine 1 comprises a supporting frame 3 which, in the embodiments illustrated, has two side uprights 4 and an upper crosspiece 5.

A rigid C-shaped structure 6 is mounted on the frame 3 in such a way that it can slide in a vertical sliding direction. The rigid structure 6 is connected to the two uprights 4 of the frame 3 by two sliding slides 7.

The machine 1 also comprises a pair of first rollers 8, at least vertically distanced from one another, located on a first side of the supporting frame 3 and having substantially horizontal axes of rotation, and a pair of second rollers 9, also at least vertically distanced from one another, located on a second side of the supporting frame 3 opposite the first side, and having substantially horizontal axes of rotation.

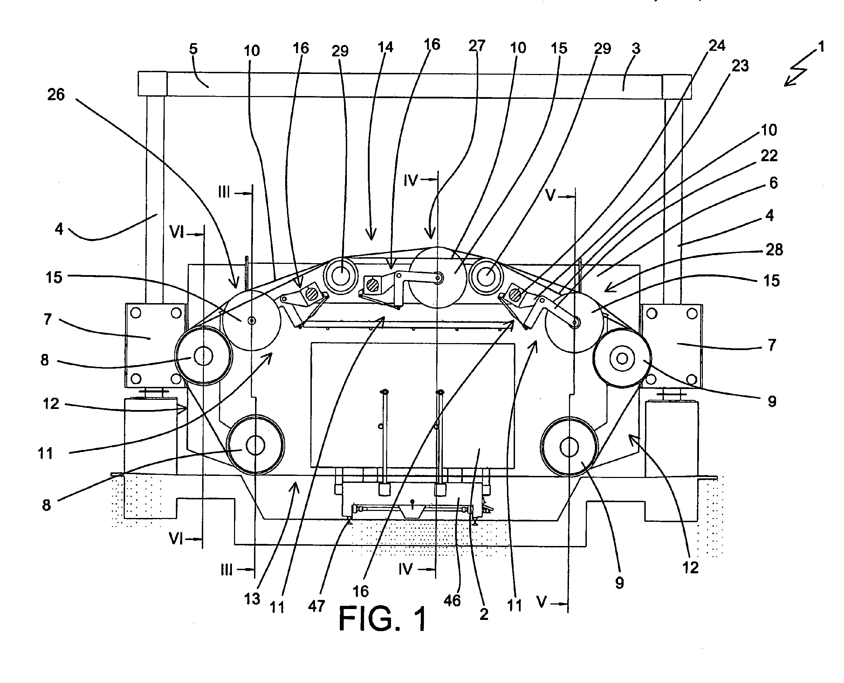

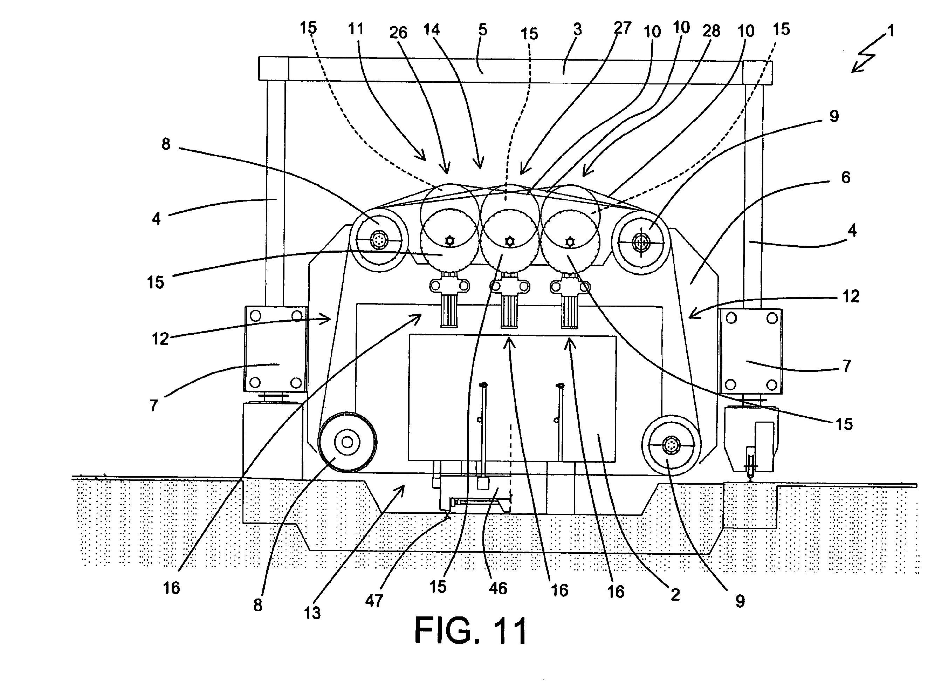

In Figures 1 and 11, the arrangement of the first and the second rollers 8, 9 is substantially symmetrical relative to a machine 1 middle plane.

The first and second rollers 8, 9 are mounted on the rigid structure 6, in such a way that they can slide vertically along the supporting frame 3 by means of the sliding slides 7.

A plurality of cutting wires 10 distanced from one another and each lying in a substantially vertical plane are wound in a loop around the first and second rollers 8, 9.

The cutting wires 10 are also connected to tensioning means 11 which allow adjustment of the tension of each cutting wire 10 independently of the tension of the other cutting wires 10.

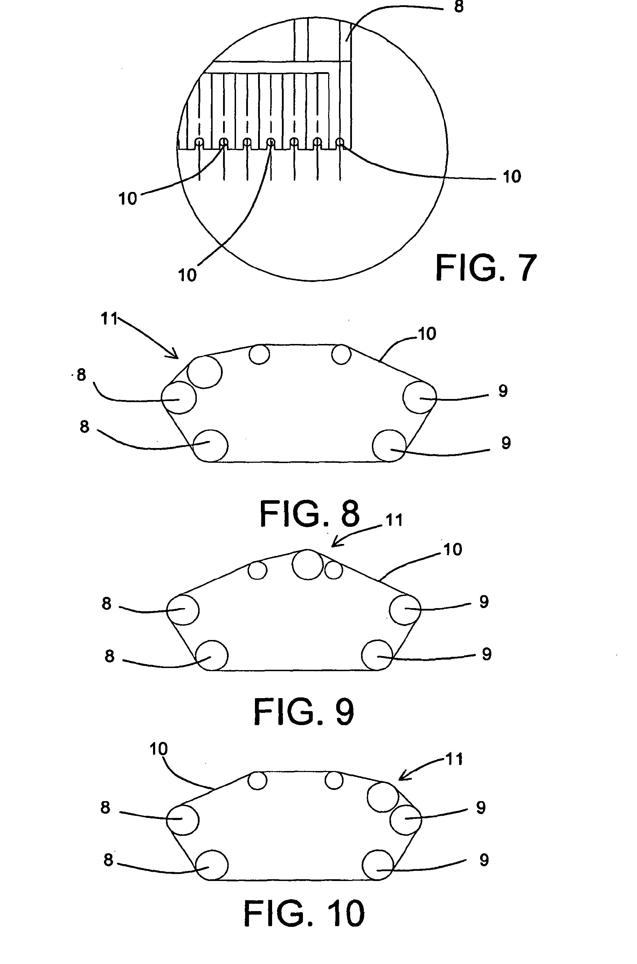

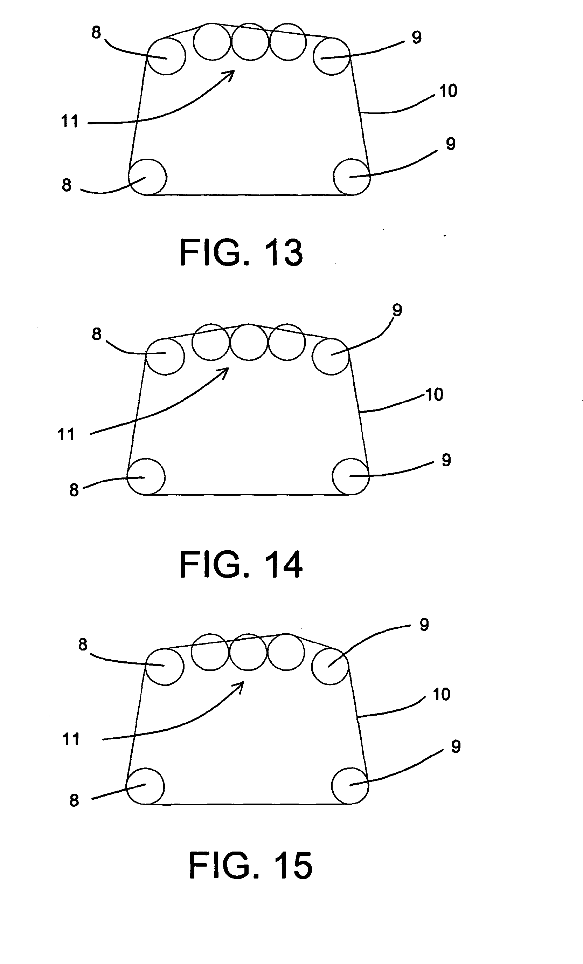

As illustrated in Figures 1, 8 - 11 and 13 - 15, each cutting wire 10 runs along a looped path formed by the first and second rollers 8, 9 and by the relative tensioning means 11. This looped path lies in a substantially vertical plane, and mainly has two transmission sections 12 extending between the rollers 8, 9 of each pair of rollers 8, 9, an active section 13 extending between the two pairs of rollers 8, 9 to cut the block 2 and a return section 14 also extending between the two pairs of rollers 8, 9, on the opposite side to the active section 13.

In the embodiments illustrated, in which the block 2 is cut by descent of the rigid structure 6 along the frame 3, the active section 13 is positioned in the lower part of the path, whilst the return section 14 is in the upper part.

Advantageously, the tensioning means 11 act on each cutting wire 10 at the return section 14 of the looped path. For this reason, the tensioning means 11 are mounted on the rigid structure 6.

Generally speaking, the tensioning means 11 comprise, for each cutting wire 10, at least one idle pulley 15 substantially coplanar with the cutting wire 10 to be tensioned and means 16 which press the pulley 15 against the cutting wire 10.

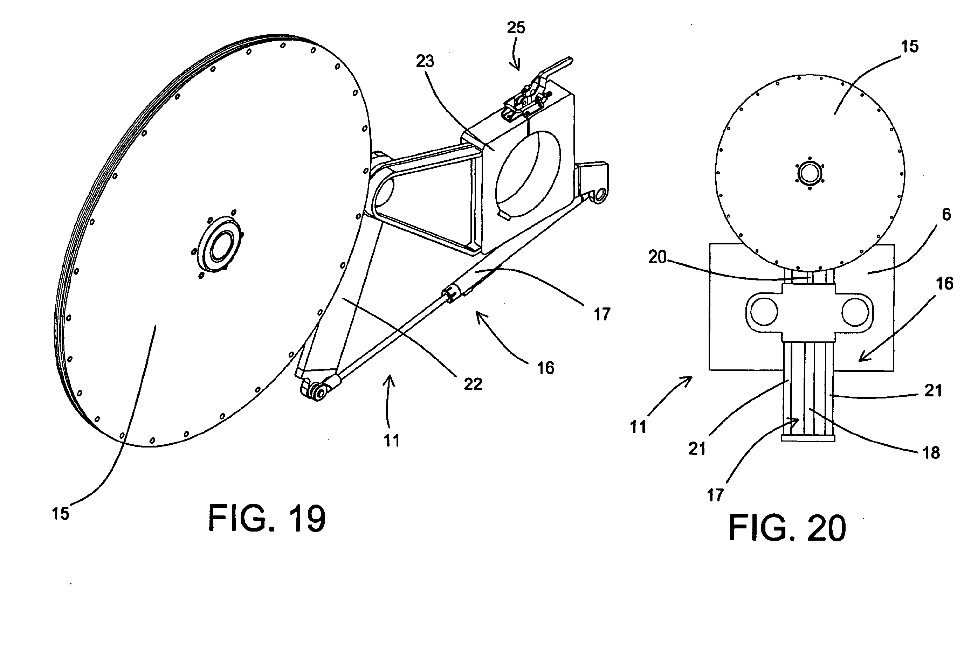

In the embodiment in Figure 20, the means 16 for pressing the pulley 15 comprise an actuator 17 mounted between the rigid structure 6 and the pulley 15.

The actuator 17 comprises a cylinder 18 fixed to the rigid structure 6 by a connecting element 19 and a mobile rod 20 to which the pulley 15 is rotatably fixed.

Two guides 21 designed to keep the pulley 15 in position are also preferably connected to each actuator 17.

In contrast, in the embodiment illustrated in Figure 19, the tensioning means 11 comprise a supporting element 22 pivoting relative to the rigid structure 6. The supporting element 22 supports a pulley 15, and means 16 for pressing the pulley 15 which in turn comprise an actuator 17 mounted between the rigid structure 6 and the supporting element 22 to turn the supporting element 22 and press the pulley 15 against the relative cutting wire 10.

Each supporting element 22 is indirectly connected to the rigid structure 6. Indeed, it pivots at a connecting part 23 in turn rigidly connected to a bracket 24 projecting from the rigid structure 6.

As illustrated in Figure 19, the connection between the connecting part 23 and the projecting bracket 24 is made using a fastening hook 25.

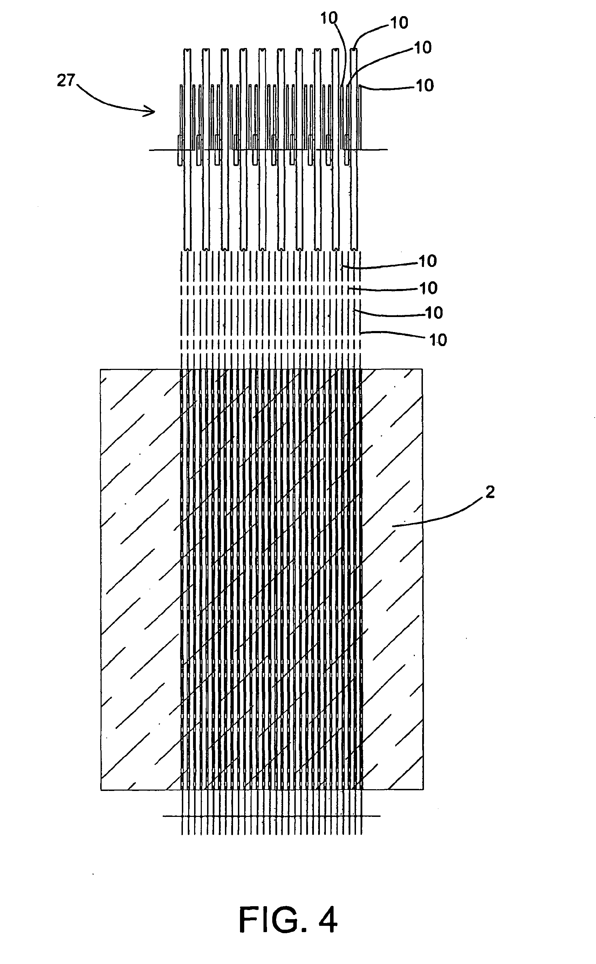

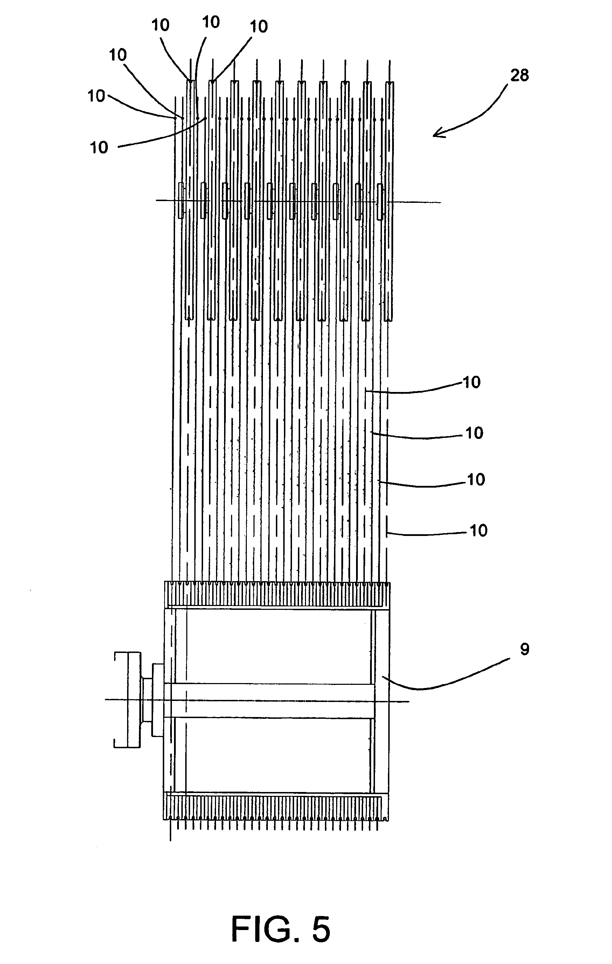

Advantageously, the tensioning means 11 are divided into two or more operating units 26, 27, 28 (in the embodiments illustrated there are three operating units) . For greater clarity, in Figures 1 to 6 and 11, a first 26, a second 27 and a third operating unit 28 are illustrated (in that order, from left to right in Figure 1 and Figure 11).

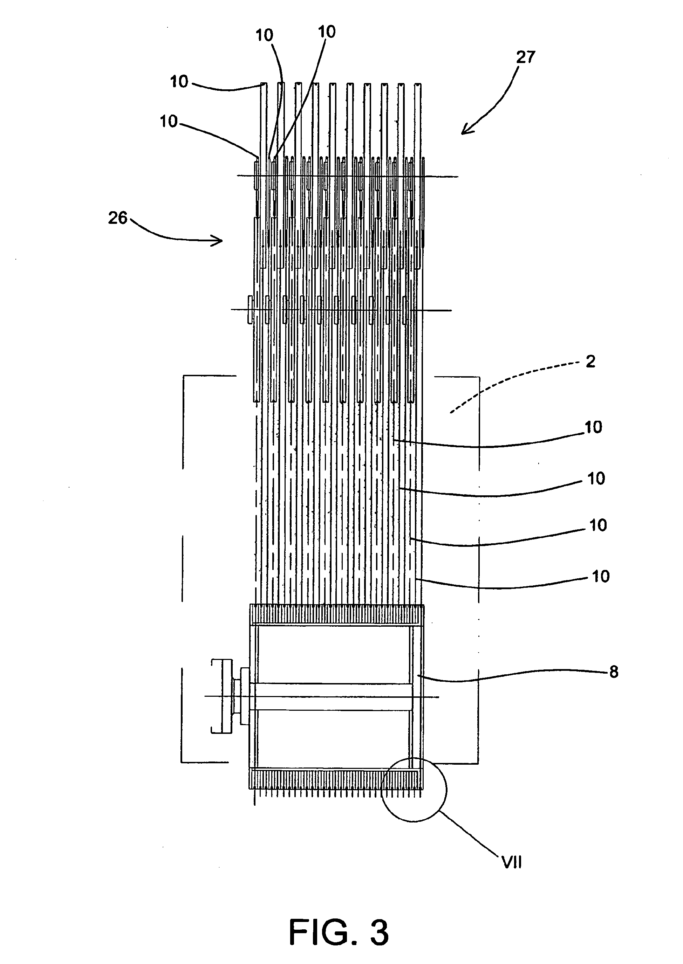

Each operating unit 26, 27, 28 acts on the cutting wires 10 distanced from one another by a number of cutting wires 10 equal to the number of operating units (Figures 3 to 5).

Figures 3 to 5 show how there are two cutting wires 10 that are not tensioned between two adjacent cutting wires 10 tensioned by the operating unit 26, 27, 28. Therefore, each operating unit 26, 27, 28 tensions one cutting wire 10 every three cutting wires 10.

Advantageously, when the number of tensioning operating units 26, 27, 28 is high, the return section 14 of the looped path may be longer than the active section 13, and, in particular, it may be convex towards the outside of the looped path (Figure 1).

In the latter case, there are also additional return rollers 29 which, advantageously, may have the same shape as the first and second rollers 8, 9, with idle rings 31 and with a fixed ring 48 which drives the rotation of the return rollers 29. In the known way, at least one of the first or the second rollers 8, 9 is motor-powered, whilst the others are idle.

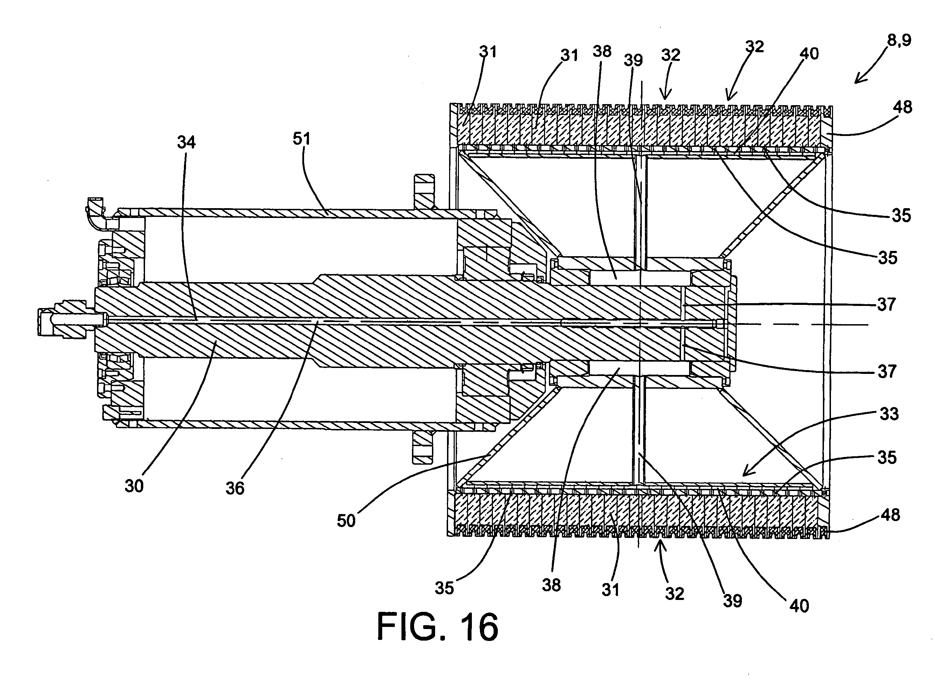

According to the preferred embodiment of the present invention, each of the first and/or second idle rollers 8, 9 (or at least one - Figure 16) comprises a central shaft 30 (protected by a fixed covering element 51), connected to the rigid structure 6, and a plurality of vertical rings 31 positioned side-by-side, mounted in such a way that they are idle on a rotary drum 50 integral with the shaft 30.

The first ring 48 remains fixed on the drum 50 and drives the rotation of the entire drum 50 driven by the relative cutting wire 10.

Each ring 31 has an external groove 32 designed to hold the cutting wire 10.

Advantageously, each idle roller 8, 9 also comprises lubricating means 33 inserted between the drum 50 and the idle rings 31.

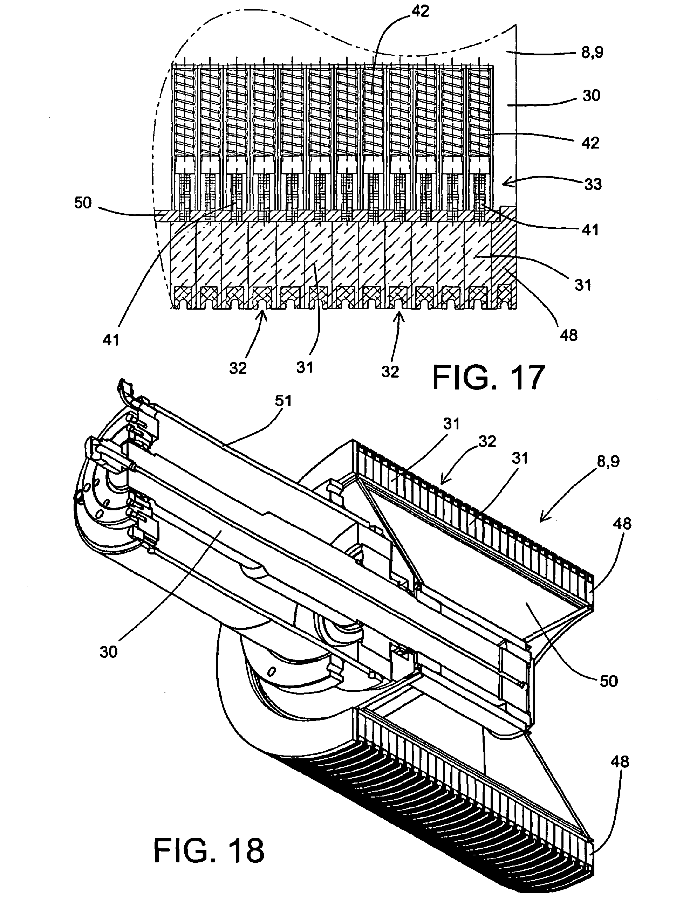

In the embodiment illustrated in Figures 16 and 18, the lubricating means 33 comprise a circuit 34 for a pressurised fluid (water, oil in water, air or other), partly inserted inside the idle roller 8, 9 and having a plurality of outlet holes 35 made radially in the drum 50, at least one of which leads to each of the idle rings 31.

The circuit 34 comprises a main pipe 36 coaxial with the roller 8, 9 and connected to the outlet holes 35 by at least two first radial pipes 37, a first ring-shaped chamber 38, at least two second radial pipes 39 and a second ring-shaped chamber 40, from which the outlet holes 35 extend.

In contrast, in the embodiment illustrated in Figure 17, the lubricating means 33 comprise at least one lubricating element 41 (for example made of graphite) projecting radially from the drum 50 at each idle ring 31, and thrust means 42 (a spring) for pushing the lubricating element 41 radially outwards.

In other embodiments there may also be self-lubricating rings 31.

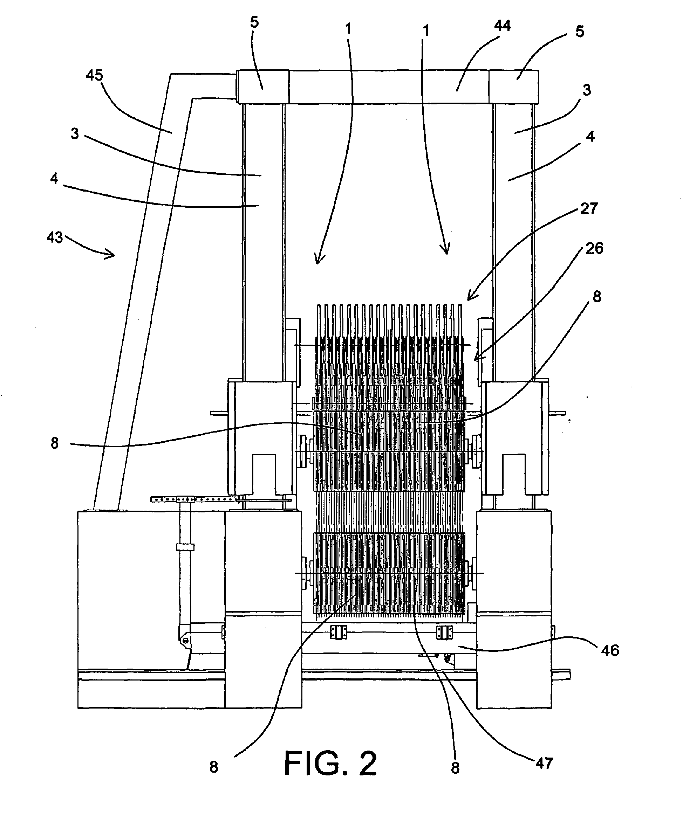

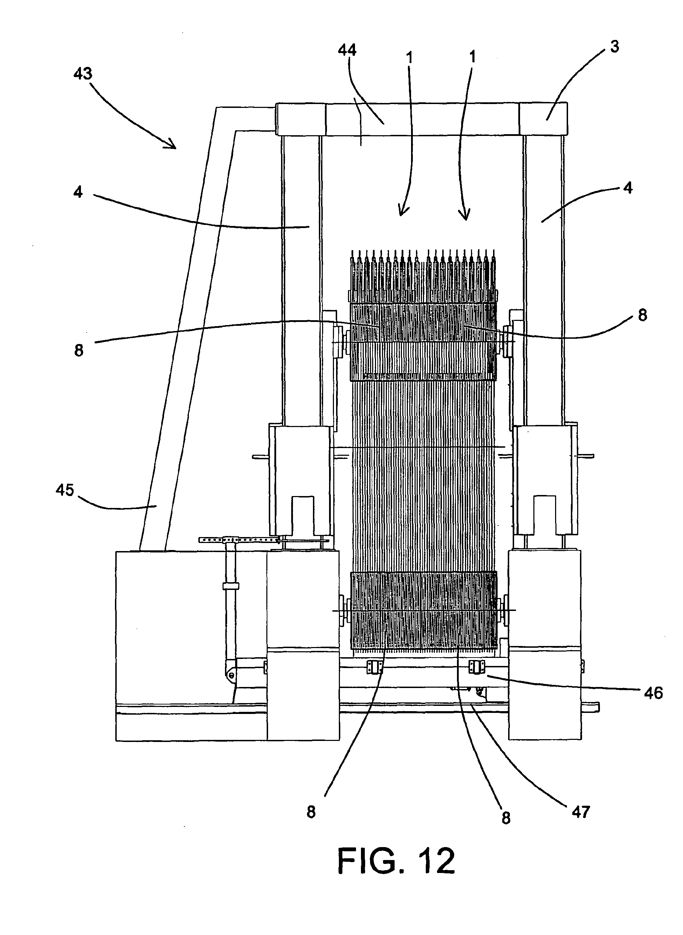

The present invention also relates to an apparatus 43 for multiple wire cutting of blocks 2 of stone material consisting of two machines 1 for multiple wire cutting made in accordance with the above description and positioned opposite one another (Figures 2 and 12).

This apparatus 43 also comprises connecting means consisting of the two upper crosspieces 44, for operatively connecting the two machines 1 to one another.

Advantageously, for the latter application at least the first and second idle rollers 8, 9 of one machine 1 are axially mobile, so that they can be distanced from those of the other machine 1, allowing insertion of the cutting wires 10 or maintenance operations.

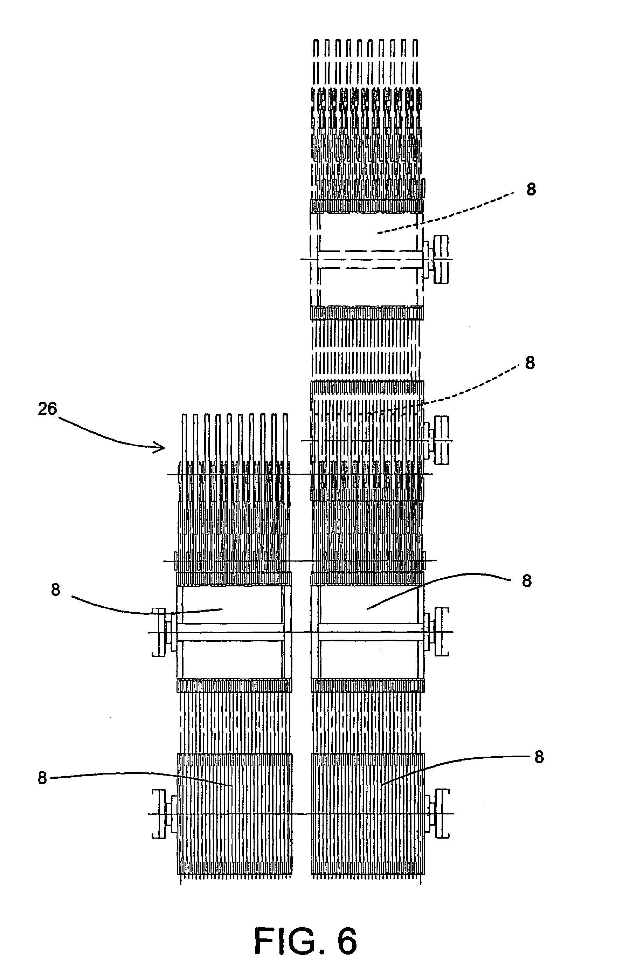

When the rollers are distanced from one another, the rigid structures 6 of the two machines 1 can be moved independently of one another, as illustrated in Figure 6, where the right-hand machine 1 is illustrated both in front of the other machine and in a raised position (partially with a dashed line).

Finally, in all cases, the block 2 of stone material can be supported by a carriage 46 mobile along a special track 47.

Operation of the machine 1 for multiple cutting disclosed is the same as that of conventional machines 1 and immediately derived from the structural description above.

The present invention brings important advantages.

Firstly, the machine for multiple wire cutting of blocks of stone material disclosed has a minimum side dimension but still allows the individual cutting wires to be tensioned separately.

Secondly, thanks to the innovative arrangement of the tensioning means, the multiple cutting machine disclosed allows users to obtain slabs of material with a thickness notably lower than on known machines.

The particular shape of the first and second rollers also allows wear to be kept to a minimum during operation.

Connecting two machines in front of one another, it is possible to obtain an apparatus with double productivity, without having to use particularly bulky and expensive structures.

The solution in which the tensioning means comprise a rotatable supporting element is also preferable to that with an actuator acting directly on the tensioning pulley, since in the latter case the actuator is more exposed to the dirt created by cutting and so is more likely to deteriorate over time.

It should also be noticed that the present invention is relatively easy to make and even the cost linked to implementation of the invention is not very high.

## Claims

1. A machine for multiple wire cutting of blocks of stone material, comprising:
- a supporting frame (3);
- a pair of first rollers (8), at least vertically distanced from one another, located on a first side of the supporting frame (3) and having substantially horizontal axes of rotation;
- a pair of second rollers (9), at least vertically distanced from one another, located on a second side of the supporting frame (3), opposite the first side, and having substantially horizontal axes of rotation;
- the first and second rollers (8), (9) able to run vertically along the supporting frame (3);
- a plurality of cutting wires (10) wound in a loop around the first and second rollers (8), (9) and each distanced from the others in a substantially vertical plane; and
- tensioning means (11) for adjusting the tension of each cutting wire (10) independently of the other cutting wires (10);
- each cutting wire (10) running along a looped path formed by the rollers and by the tensioning means (11), this looped path lying in a substantially vertical plane, and mainly having two transmission sections (12) extending between the rollers of each pair of rollers, an active section (13) extending between the two pairs of rollers to cut the block (2) of stone material and a return section (14) also extending between the two pairs of rollers, on the opposite side to the active section (13);
the machine being **characterised in that** the tensioning means (11) act on each cutting wire (10) at the return section (14) of the looped path.

2. The machine for multiple wire cutting according to claim 1, **characterised in that** it also comprises at least a rigid structure (6) mounted on the frame (3) in such a way that it can slide in a vertical sliding direction, the first and second rollers (8), (9) and the tensioning means (11) being mounted on the rigid structure (6).

3. The machine for multiple wire cutting according to claim 1 or 2, **characterised in that** the tensioning means (11) comprise, for each cutting wire (10), at least one idle pulley (15) substantially coplanar with the loop created by the cutting wire (10) to be tensioned and means (16) which press the pulley (15) against the cutting wire (10).

4. The machine for multiple wire cutting according to claims 2 and 3, **characterised in that** the means (16) for pressing the pulley (15) comprise an actuator (17) mounted between the rigid structure (6) and the pulley (15).

5. The machine for multiple wire cutting according to claims 2 and 3, **characterised in that** the tensioning means (11) also comprise a supporting element (22) pivoting relative to the rigid structure (6) and supporting the pulley (15), and **characterised in that** the means (16) for pressing the pulley (15) comprise an actuator (17) mounted between the rigid structure (6) and the supporting element (22) to turn the supporting element (22) and press the pulley (15) against the relative cutting wire (10).

6. The machine for multiple wire cutting according to any of the foregoing claims, **characterised in that** the tensioning means (11) comprise two or more operating units (26), (27), (28), each operating unit (26), (27), (28) acting on the cutting wires (10) distanced from one another by a number of cutting wires (10) equal to the number of operating units (26), (27), (28).

7. The machine for multiple wire cutting according to any of the foregoing claims, **characterised in that** the return section (14) of the looped path is longer than the active section (13).

8. The machine for multiple wire cutting according to any of the foregoing claims, **characterised in that** at least one of the first and second rollers (8), (9) is motor-powered, the others being idle.

9. The machine for multiple wire cutting according to claim 8, **characterised in that** at least one of the first and second idle rollers (8), (9) comprises a central shaft (30), a drum (50) integral with the shaft (30) and a plurality of vertical rings (31) positioned side-by-side and mounted in such a way that they are idle on a drum (50) independently of one another, each ring (31) having an external groove (32) designed to hold a cutting wire (10) .

10. The machine for multiple wire cutting according to claim 9, **characterised in that** at least one of the first and second idle rollers (8), (9) also comprises lubricating means (33) inserted between the drum (30) and the idle rings (31).

11. The machine for multiple wire cutting according to claim 10, **characterised in that** the lubricating means (33) comprise a circuit (34) for a pressurised fluid, having a plurality of outlet holes (35) made in the drum (50), at least one of which leads to each of the idle rings (31).

12. The machine for multiple wire cutting according to claim 10, **characterised in that** the lubricating means (33) comprise at least one lubricating element (41) projecting radially from the drum (50) at each idle ring (31), and thrust means (42) for pushing the lubricating element (41) radially outwards.

13. The machine for multiple wire cutting according to any of the foregoing claims, **characterised in that** the first and second idle rollers (8), (9) are axially mobile.

14. The machine for multiple wire cutting according to any of the foregoing claims, **characterised in that** the return section (14) is convex towards the outside of the looped path.

15. An apparatus for multiple wire cutting of blocks (2) of stone material, **characterised in that** it comprises two machines (1) for multiple wire cutting according to any of the foregoing claims, mounted in such a way that they are opposite one another, and connecting means (44) for operatively connecting the two machines (1) to one another.

## Patentansprüche

1. Maschine zum Mehrfach-Drahtschneiden von Gesteinsblöcken, enthaltend:
- einen Trägerrahmen (3);
- ein Paar von ersten Rollen (8), die wenigstens vertikal voneinander abstehen und an einer ersten Seite des Trägerrahmens (3) angeordnet sind, wobei sie im wesentlichen horizontale Drehachsen haben;
- ein Paar von zweiten Rollen (9), die wenigstens vertikal voneinander abstehen und an einer zweiten Seite des Trägerrahmens (3) angeordnet sind, der ersten Seite gegenüberliegend, wobei sie im wesentlichen horizontale Drehachsen haben;
- wobei die ersten und zweiten Rollen (8), (9) in der Lage sind, vertikal entlang dem Trägerrahmen (3) zu laufen;
- eine Anzahl von Schneiddrähten (10), die ringförmig geschlossen um die ersten und zweiten Rollen (8), (9) gewunden sind und jeder von den anderen in einer im wesentlichen vertikalen Ebene abstehend ist; und
- Spannmittel (11) zum Regulieren der Spannung eines jeden Schneiddrahtes (10) unabhängig von den anderen Schneiddrähten (10);
- wobei jeder Schneiddraht (10) entlang einer ringförmig geschlossenen Bahn läuft, gebildet durch die Rollen und durch die Spannmittel (11), wobei diese ringförmig geschlossene Bahn in einer im wesentlichen vertikalen Ebene liegt und vorwiegend zwei Übertragungsabschnitte (12) hat, die sich zwischen den Rollen eines jeden Rollenpaares erstrecken, und zwar einen aktiven Abschnitt (13), der sich zwischen den beiden Paaren von Rollen erstreckt, um den Block (2) aus Gesteinsmaterial zu schneiden, und einen Umlenkabschnitt (14), der sich ebenfalls zwischen den beiden Paaren von Rollen erstreckt, und zwar auf der entgegengesetzten Seite von dem aktiven Abschnitt (13);
wobei die Maschine **dadurch gekennzeichnet ist, dass** die Spannmittel (11) an dem Umlenkabschnitt (14) der ringförmig geschlossenen Bahn auf jeden der Schneiddrähte (10) wirken.

2. Maschine zum Mehrfach-Drahtschneiden nach Patentanspruch 1, **dadurch gekennzeichnet, dass** sie ebenfalls wenigstens eine starre Struktur (6) enthält, montiert an dem Rahmen (3) auf solche Weise, dass sie in einer vertikalen Richtung gleiten kann, wobei die ersten und zweiten Rollen (8), (9) und die Spannmittel (11) an der starren Struktur (6) montiert sind.

3. Maschine zum Mehrfach-Drahtschneiden nach Patentanspruch 1 oder 2, **dadurch gekennzeichnet, dass** die Spannmittel (11) für jeden Schneiddraht (10) wenigstens eine leerlaufende Scheibe (15) haben, im wesentlichen koplanar mit der Schlaufe, die durch den zu spannenden Schneiddraht (10) gebildet ist, sowie Mittel (16), welche die Scheibe (15) gegen den Schneiddraht (10) drücken.

4. Maschine zum Mehrfach-Drahtschneiden nach den Patentansprüchen 2 und 3, **dadurch gekennzeichnet, dass** die Mittel (16) zum Drücken der Scheibe (15) ein Stellorgan (17) haben, montiert zwischen der starren Struktur (6) und der Scheibe (15).

5. Maschine zum Mehrfach-Drahtschneiden nach den Patentansprüchen 2 und 3, **dadurch gekennzeichnet, dass** die Spannmittel (11) ebenfalls ein Trägerelement (22) enthalten, drehbar im Verhältnis zu der starren Struktur (6) und die Scheibe (15) tragend, und **dadurch gekennzeichnet, dass** die Mittel (16) zum Drücken der Scheibe (15) ein Stellorgan (17) enthalten, montiert zwischen der starren Struktur (6) und dem Trägerelement (22), um das Trägerelement (22) zu drehen und die Scheibe (15) gegen den entsprechenden Schneiddraht (10) zu pressen.

6. Maschine zum Mehrfach-Drahtschneiden nach jedem der vorstehenden Patentansprüche, **dadurch gekennzeichnet, dass** die Spannmittel (11) zwei oder mehrere Arbeitseinheiten (26), (27), (28) haben, wobei jede Arbeitseinheit (26), (27), (28) auf die Schneiddrähte (10) wirkt, die um eine Zahl von Schneiddrähten (10) voneinander abstehend sind, welche der Zahl der Arbeitseinheiten (26), (27), (28) entspricht.

7. Maschine zum Mehrfach-Drahtschneiden nach jedem der vorstehenden Patentansprüche, **dadurch gekennzeichnet, dass** der Umlenkabschnitt (14) der ringförmig geschlossenen Bahn länger ist als der aktive Abschnitt (13).

8. Maschine zum Mehrfach-Drahtschneiden nach jedem der vorstehenden Patentansprüche, **dadurch gekennzeichnet, dass** wenigstens eine der ersten und zweiten Rollen (8), (9) motorgetrieben ist, während die anderen leerlaufend sind.

9. Maschine zum Mehrfach-Drahtschneiden nach Patentanspruch 8, **dadurch gekennzeichnet, dass** wenigstens eine der ersten und zweiten leerlaufenden Rollen (8), (9) eine mittlere Welle (30), eine mit der Welle (30) fest verbundene Trommel (50) und eine Anzahl von vertikalen Ringen (31) enthält, positioniert Seite an Seite und auf solche Weise montiert, dass sie leerlaufend auf einer Trommel (50) und unabhängig voneinander sind, wobei jeder Ring (31) eine äussere Rille (32) aufweist, dazu bestimmt, einen Schneiddraht (10) zu halten.

10. Maschine zum Mehrfach-Drahtschneiden nach Patentanspruch 9, **dadurch gekennzeichnet, dass** wenigstens eine der ersten und zweiten leerlaufenden Rollen (8), (9) ebenfalls Schmiermittel (33) enthält, eingesetzt zwischen der Trommel (50) und den leerlaufenden Ringen (31).

11. Maschine zum Mehrfach-Drahtschneiden nach Patentanspruch 10, **dadurch gekennzeichnet, dass** die Schmiermittel (33) einen Umlauf (34) für eine unter Druck stehende Flüssigkeit enthalten, der in die Trommel (50) eingearbeitete eine Anzahl von Auslassöffnungen (35) hat, von welchen wenigstens eine zu einem jeden der leerlaufenden Ringe (31) führt.

12. Maschine zum Mehrfach-Drahtschneiden nach Patentanspruch 10, **dadurch gekennzeichnet, dass** die Schmiermittel (33) wenigstens ein Schmierelement (41) enthalten, das an jedem leerlaufenden Ring (31) radial von der Trommel (50) hervorsteht, sowie Schubmittel (42) zum Schieben des Schmierelementes (41) radial nach aussen.

13. Maschine zum Mehrfach-Drahtschneiden nach jedem der vorstehenden Patentansprüche, **dadurch gekennzeichnet, dass** die ersten und zweiten leerlaufenden Rollen (8), (9) axial beweglich sind.

14. Maschine zum Mehrfach-Drahtschneiden nach jedem der vorstehenden Patentansprüche, **dadurch gekennzeichnet, dass** der Umlenkabschnitt (14) zu der Aussenseite der ringförmige geschlossenen Bahn hin konvex ist.

15. Einrichtung zum Mehrfach-Drahtschneiden von Blöcken (2) von Gesteinsmaterial, **dadurch gekennzeichnet, dass** sie zwei Maschinen (1) zum Mehrfach-Drahtschneiden nach jedem der vorstehenden Patentansprüche enthält, montiert auf solche Weise, dass sie sich einander gegenüberliegen, sowie Verbindungsmittel (44) zum betrieblichen Verbinden der beiden Maschinen (1) miteinander.

## Revendications

1. Une machine pour la coupe multiple par fil de blocs de pierre, comprenant :
- un châssis de support (3) ;
- une paire de premiers rouleaux (8), à distance l'un de l'autre au moins verticalement, situés sur un premier côté du châssis de support (3) et ayant des axes de rotation essentiellement horizontaux ;
- une paire de seconds rouleaux (9), à distance l'un de l'autre au moins verticalement, situés sur un second côté du châssis de support (3), opposé au premier côté, et ayant des axes de rotation essentiellement horizontaux ;
- les premiers et seconds rouleaux (8), (9) pouvant coulisser verticalement le long du châssis de support (3) ;
- une pluralité de fils de coupe (10) enroulés en boucle autour des premiers et seconds rouleaux (8), (9) et espacés entre eux dans un plan essentiellement vertical ; et
- des moyens de mise en tension (11) pour régler La tension de chaque fil de coupe (10) de façon indépendante par rapport aux autres fils de coupe (10) ;
- chaque fil de coupe (10) se développant suivant un parcours en boucle formé par les rouleaux et par les moyens de mise en tension (11), ce parcours en boucle étant situé dans un plan essentiellement vertical et ayant principalement deux tronçons de transmission (12) s'étendant entre les rouleaux de chaque paire de rouleaux, un tronçon actif (13) s'étendant entre les deux paires de rouleaux pour couper le bloc (2) de pierre et un tronçon de retour (14) s'étendant aussi entre les deux paires de rouleaux mais du côté opposé au tronçon actif (13) ;
la machine étant **caractérisée en ce que** les moyens de mise en tension (11) agissent sur chaque fil de coupe (10) au niveau du tronçon de retour (14) du parcours en boucle.

2. La machine pour la coupe multiple par fil selon la revendication 1, **caractérisée en ce qu'**elle comprend aussi au moins une structure rigide (6) montée sur le châssis (3) de manière à pouvoir coulisser dans une direction de coulissement verticale, les premiers et seconds rouleaux (8), (9) et les moyens de mise en tension (11) étant montés sur la structure rigide (6).

3. La machine pour la coupe multiple par fil selon la revendication 1 ou 2, **caractérisée en ce que** les moyens de mise en tension (11) comprennent, pour chaque fil de coupe (10), au moins une poulie folle (15) essentiellement coplanaire à la boucle formée par le fil de coupe (10) devant être tendu et des moyens (16) destinés à presser la poulie (15) contre le fil de coupe (10).

4. La machine pour la coupe multiple par fil selon les revendications 2 et 3, **caractérisée en ce que** les moyens (16) destinés à presser la poulie (15) comprennent un actionneur (17) monté entre la structure rigide (6) et la poulie (15).

5. La machine pour la coupe multiple par fil selon les revendications 2 et 3, **caractérisée en ce que** les moyens de mise en tension (11) comprennent aussi un élément de support (22) pivotant par rapport à la structure rigide (6) et supportant la poulie (15), et **caractérisée en ce que** les moyens (16) destinés à presser la poulie (15) comprennent un actionneur (17) monté entre la structure rigide (6) et l'élément de support (22) pour tourner ledit élément de support (22) et presser la poulie (15) contre le fil de coupe (10) correspondant.

6. La machine pour la coupe multiple par fil selon l'une quelconque des revendications précédentes, **caractérisée en ce que** les moyens de mise en tension (11) comprennent deux, ou plus, unités opératrices (26), (27), (28), chaque unité opératrice (26), (27), (28) agissant sur les fils de coupe (10) espacés entre eux d'un nombre de fils de coupe (10) égal au nombre d'unités opératrices (26), (27), (28).

7. La machine pour la coupe multiple par fil selon l'une quelconque des revendications précédentes, **caractérisée en ce que** le tronçon de retour (14) du parcours en boucle est plus long que le tronçon actif (13).

8. La machine pour la coupe multiple par fil selon l'une quelconque des revendications précédentes, **caractérisée en ce qu'**au moins un des premiers et seconds rouleaux (8), (9) est motorisé, les autres étant fous.

9. La machine pour la coupe multiple par fil selon la revendication 8, **caractérisée en ce qu'** au moins un des premiers et seconds rouleaux fous (8), (9) comprend un arbre central (30), un tambour (50) solidaire de l'arbre (30) et une pluralité de bagues verticales (31) disposées les unes à côté des autres et montées de manière à être folles sur un tambour (50) indépendamment l'une de l'autre, chaque bague (31) ayant une rainure extérieure (32) destinée à recevoir un fil de coupe (10).

10. La machine pour la coupe multiple par fil selon la revendication 9, **caractérisée en ce qu'** au moins un des premiers et seconds rouleaux fous (8), (9) comprend aussi des moyens de lubrification (33) intercalés entre le tambour (30) et les bagues folles (31).

11. La machine pour la coupe multiple par fil selon la revendication 10, **caractérisée en ce que** les moyens de lubrification (33) comprennent un circuit (34) pour un fluide sous pression, présentant une pluralité d'orifices de sortie (35) réalisés dans le tambour (50) et parmi lesquels au moins un débouche au niveau de chacune des bagues folles (31).

12. La machine pour la coupe multiple par fil selon la revendication 10, **caractérisée en ce que** les moyens de lubrification (33) comprennent au moins un élément de lubrification (41) qui dépasse radialement du tambour (50) au niveau de chaque bague folle (31), et des moyens de poussée (42) destinés à pousser radialement l'élément de lubrification (41) vers l'extérieur.

13. La machine pour la coupe multiple par fil selon l'une quelconque des revendications précédentes, **caractérisée en ce que** les premiers et seconds rouleaux fous (8), (9) sont mobiles axialement.

14. La machine pour la coupe multiple par fil selon l'une quelconque des revendications précédentes, **caractérisée en ce que** le tronçon de retour (14) est convexe vers l'extérieur du parcours en boucle.

15. Un appareil pour la coupe multiple par fil de blocs (2) de pierre, **caractérisé en ce qu'**il comprend deux machines (1) pour la coupe multiple par fil selon l'une quelconque des revendications précédentes, montées de manière à être face à face, et des moyens d'accouplement (44) destinés à accoupler l'une à l'autre les deux machines (1) de façon opérationnelle.
